# EUROPEAN PATENT APPLICATION

(11) **EP 2 120 443 A1**
(43) Date of publication of application: **18.11.2009**
(21) Application number: 08251711.1
(22) Date of filing: 15.05.2008
(51) Int. Cl.: H04M 19/08

(54) **Power supply system**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

The electrical components 31, 32 in a network node 3 having no electrical connection to the exchange 1 are powered from a power distribution unit 36 in the network node 3 which collects power through the wired connections 10, 110 from the customer equipment 4, 104. The network node 3 has a power control module 33 which generates signals to control the co-operating equipments 4, 104 to each deliver a proportion of the power required in accordance with properties of the respective connections 10, 110, such as their electrical resistance or the maximum bitrate they can support. Apportioning the power to be collected, alllowscthe effects of greater power losses in the longer lines 104 to be minimised, and also allows users 104 with poorer quality connections to make a smaller contribution to the electrical power required.

## Description

This invention relates to the provision of electrical power to elements of a telecommunications network. In conventional telephone networks (known colloquially as "POTS" - plain old telephone system) the end-to-end connection between a telephone exchange and customer premises is made by a branched network of wires along which an electric current can be transmitted, the current being modulated to provide analogue voice signals, and also digital pulses as used for dialling numbers, activating bells or other alerts ("ringing current") and, more recently, for data transmission such as facsimile transmissions or computer connections to the "Internet". The existence of an end-to-end electrical connection in conventional systems allows simple customer equipment (specifically telephone handsets) to be powered at low voltage from a power supply at the exchange. This was a particular advantage in the early development of telecommunications networks, when mains power supplies were less widespread than they have since become. It remains a useful feature that the telephone equipment is powered independently of the mains power supply to the customer premises, as in the event of failure of that supply, a user can still use the telephone to report the fact to the power supply company. Indeed, the user instructions for cordless telephones (which require a mains supply for the base station) strongly advise users to also maintain a fixed (wired-in) telephone on the premises for use in such eventualities.

The presence of an end-to-end wired network has also allowed intermediate elements (nodes) in the branched network to be powered. Many of these points are either in public locations (the familiar roadside "cabinets", and the "distribution points" which are typically positioned at the top of wooden poles from where the "final drop" wire is connected to the customer premises). These nodes are unattended and often either in remote locations, where it may be difficult to arrange a mains power supply, or in public locations where the presence of a mains power supply could constitute a hazard to some members of the public, and a temptation to others. Hitherto, such nodes have had relatively modest power requirements, and provision of a low-voltage power supply from the exchange has hitherto been sufficient to avoid the need for a mains power supply to be provided to these nodes.

Modern developments in telephony have made this simple pattern less practical in recent times. In particular, the use of electromagnetic media (e.g. microwave or, more commonly, optical fibre) is already well-established in the trunk network (between exchanges) and is now becoming established in the local distribution network. Such arrangements are sometimes known as "fibre to the kerb", only the "final drop" from distribution point to customer premises remaining as conventional copper wire. The use of such connections allows much greater capacity. It is also cheaper as copper is relatively expensive compared with optical fibre (or indeed microwaves). However, electrical power cannot be provided to the network nodes over such media.

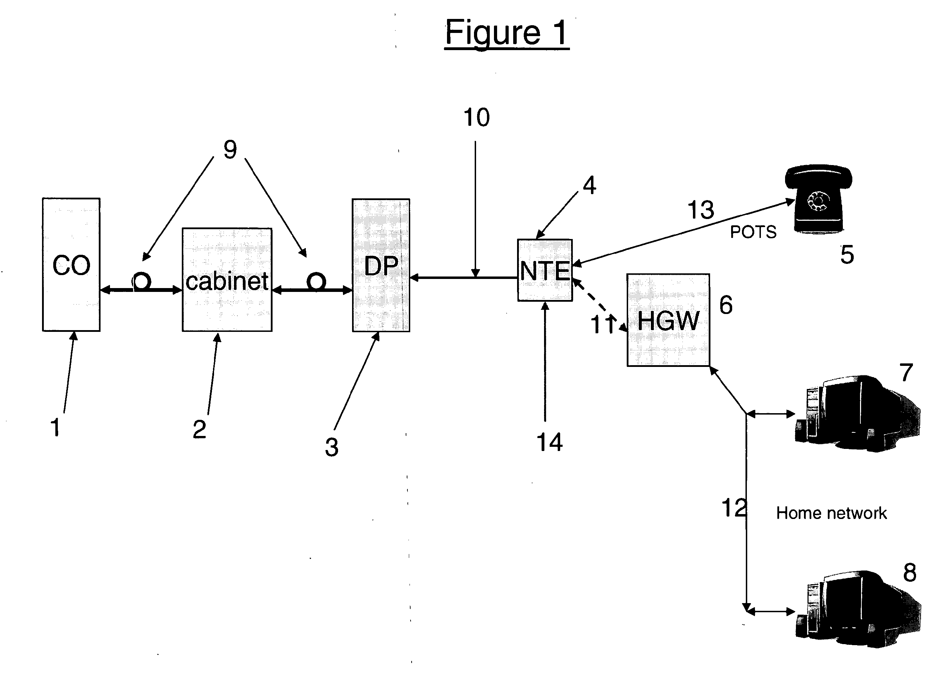

Such an arrangement is shown in Figure 1. The exchange or central office 1 is connected by way of one or more nodes, known as cabinets 2 and distribution points 3, to the customer premises network termination equipment (NTE) 4. As shown in Figure 1, the NTEs are connected to the distribution point 3, but longer connections where the termination is a long distance from any other termination may be connected directly to a cabinet 4 without an intermediate DP 3. Connected to the termination equipment 4 by internal connections 11, 13 are one or more standard telephones 5 and a "hub" (home gateway) 6 serving a home network 12 (wired or wireless) to which is connected one or more computer terminals 7, 8.

As shown in figure 1, the "final drop" 10 between the distribution point 3 and the customer premises network termination equipment 4 is made by copper connection, but the connections 9 between the central office 1 and the cabinet 2, and between the cabinet 2 and the distribution point 3, are made by fibre optic connection.

Such arrangements break the hitherto continuous copper connection between the local exchange 1 and the customer premises 4, and more specifically between the local exchange 1 and the intermediate nodes (cabinet 2, distribution point 3). At the same time, the intermediate nodes 2, 3 now have greater power requirements than hitherto, in particular because transmission over the optical or microwave links itself requires power to generate the optical or microwave carrier.

However, most modern customer premises telecommunications equipment, such as computers, require much more power than can be supplied over the low-voltage telecommunications network 9, 10 and therefore have their own mains supply. It has been proposed for electrical power to be fed into the telecommunications network by way of the customer premises termination 4 from a power feed 14, and through the "final drop" 10, (which remains wired) to the distribution point 3, as shown in Figure 1. (To encourage the use of suitable customer premises equipment, the use of such equipment might be expected to attract a discount from the telecommunications provider). As each distribution point feeds a number of customer premises, the power required of each customer would be relatively small.

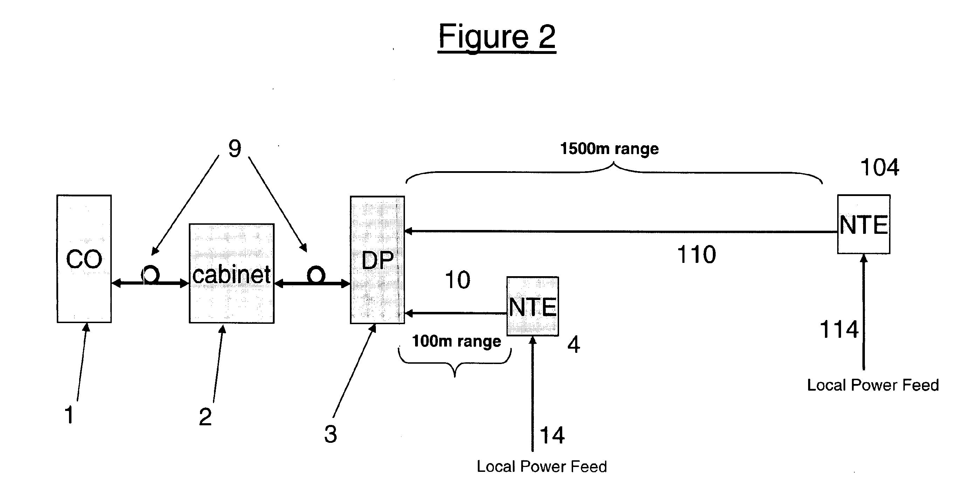

A problem with such an arrangement is that power losses over electrical connections are proportional to the resistance of each wire. Customer premises are at different distances from the distribution point and consequently, because the resistance of a wire is proportional to its length, more power is lost in the longer connections than in the shorter ones. For example, consider the situation in Figure 2, in which the distribution point 3 is connected by respective "final drops" 10, 110 to two individual customer premises equipments 4, 104, each with a respective power feed 14, 114. The connections 10, 110 are of different lengths, respectively 100 metres and 1500m. VDSL (Very High Speed Digital Subscriber Line) services can be operated reliably up to such distances - beyond that other system such as ADSL (asymmetric digital subscriber line) are preferred.

Power losses for a number of situations are calculated in Table 1 below, which assumes a 120V d.c. supply at each customer premises, and a standard DW10 0.5 mm diameter dropwire copper cable with a resistance of 0.168 ohm/metre. (Note that this figure is the combined resistance of the out and return legs of the circuit, so it is actually the resistance of a 2 metre length of copper wire of that diameter)

In Example 1, each cable 10, 110 carries the same current (46mA in the example). To generate this current the NTEs 4, 104 will each draw the same power (5.52W) from their respective power supplies 14, 114, and deliver it to their respective network connections 10, 110. Power losses in a cable are given by the expression I²R (where "R" is the resistance of the cable and "I" is the current passing through it) so, given the cable resistance of 0.168-ohm/metre cited above, the transmission loss on the shorter line is 40mW, whilst the loss from the longer cable 110 is 540mW (all values rounded to nearest 10mW (0.01W). Thus the usable power delivered to the DP 3 from the shorter cable 10 is 5.5W, and from the longer one 5W, a total of 10.5W. (See Table 1, Example 1). Thus, although each customer unit 4, 104 supplies the same power to its respective cable 10, 110, different losses in those cables 10, 100 result in significant differences in the power actually delivered to the distribution point 3.

If the network node 3 were configured such that each cable 10, 110 delivers the same amount of power to the distribution point 3, the more remote users would have to supply even more power to the distribution network - see Table 1, Example 2, which shows that for the two users to contribute equaiiy to a 10.5 Watt requirement as in Example 1, the more remote user must draw more than 10% more current from its power supply than the less remote user - only for this excess to be all lost in transmission. Not only is this wasteful, (as the more lossy cable is carrying more current), but it would be unfair, because the more remote user is drawing more power but the quality of service to a customer premises, in particular the bandwidth available to the end user, generally deteriorates with distance. Consequently, the users receiving the worst service would also be supplying the most electrical power to the system, only for it to be lost in heating the wires.

Note that there may also be losses in the mains power feeds 14, 114 to the customer equipment, but allowing for these is beyond the scope of the present discussion

It would be desirable, both on environmental grounds and in fairness to the telecommunications provider's customers, to distribute the requirement for power in a different way.

According to the invention, there is provided a telecommunications network node having means to receive power from a plurality of network terminations, comprising means for determining a property of each connection, and delivering control signals over each connection to control the power delivered by the respective network terminations to their respective connections as a function of the property so determined. In the preferred embodiment, the power to be delivered is in an inverse relation to the resistance of the connection. More specifically, the power to be delivered by the termination is arranged to be in direct proportion to the available capacity of the connection, which is indirectly related to the resistance of the connection.

The system may be operated autonomously by the network node, using properties of the connection which can be determined directly from the node. However, in some embodiments, the node may co-operate with the individual network terminations to determine the appropriate line properties, and/or to control the power to be delivered. Accordingly, in one aspect the invention also provides a termination unit for a telecommunications network, comprising a power feed for delivering electrical power to the unit and a communications connection for electrical connection to the network, and means for responding to an input delivered over the network connection to control the power delivered into the network connection. In a preferred embodiment, the network termination reports the available bandwidth to the network - this allows the network to determine the available bandwidth, and determine the appropriate power to be delivered.

The relationship between power delivered and the controlling property may depend on the properties of more than one such connection, and may also be subject to maximum or minimum values. Thus, for example, the current drawn may be proportional to the bitrate on each of several connections, subject to a maximum value on any given connection, and such that the aggregate current from the connections equals a predetermined value.

An embodiment of the invention will now be described, by way of example, with reference to the Figures, in which
Figure 1 illustrates a basic reverse power feed architecture as already discussed
Figure 2 illustrates a reverse power feed architecture with two local feeds of different lengths, again as already discussed
Figure 3 is a functional block diagram of a network node according to the invention
Figure 4 is a functional block diagram of a network termination with a power feed, complementary to the network node of Figure 3, and also according to the invention

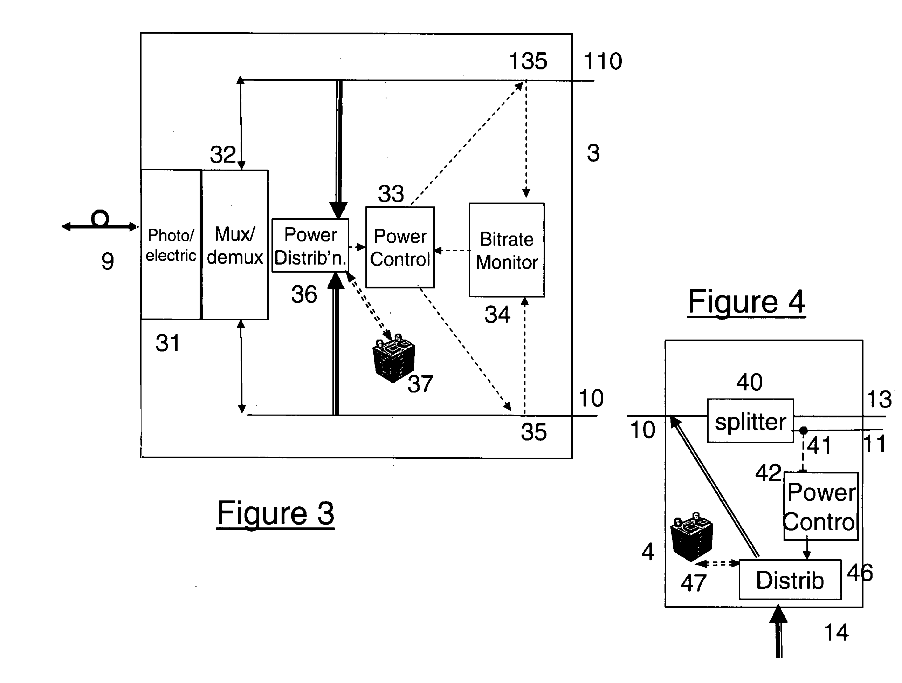

Figure 3 depicts a network node 3 configured to interconnect an optical connection 9 and two or more wired local connections 10, 110. It includes an optical/copper interface 31 for converting signals from the optical connection 9 to baseband for transmission over the copper connections 10, 110, and vice versa. There is also a multiplexer/demultiplexer 32 for distributing the signals to the two or more wired connections 10, 110, and for combining the signals received therefrom.

The optical/copper interface 31 and multiplexer/demultiplexer 32 require electrical power to operate, and this power is distributed to these components by a power distribution unit 36 in the network node 3. In this invention, the power is supplied to the power distribution unit 36 from the customer equipment 4, 104 through the wired connections 10, 110. The network node 3 is provided with a power control module 33 which generates signals to control the co-operating equipments 4, 104 to deliver the power required, in accordance with demand assessed by the power distribution unit 36.

The power control module 33 is programmed to generate power control signals in accordance with known properties of the various connections 10, 110, such as the geographical distance to the respective network terminations 4, 104. In the preferred embodiment a measuring unit 34 determines a physical property of the connections - this may be the electrical resistance of the wired connection, or the maximum bitrate it can support. These properties are detected by taking measurements from measurement points 35, 135 on the wired connections, and the results of such measurements are fed to the power control unit 33. The measurement of line characteristics is a well-developed art, and is used for instance to test line integrity, or to test a line's suitability for advanced services such as high bandwidth internet access.

The network termination equipment 4 in the customer premises is configured as shown in Figure 4. (Each customer premises has a similar network termination equipment, as also exemplified by the equipment 104 in Figure 2). The device also includes a splitter 40 to separate broadband and POTS traffic carried over respective connections 11, 13. Power control signals transmitted from the power control unit 33 in the distribution point 3 are intercepted at a detection point 41 and processed by a power control unit 42, controlling a power distribution unit 46 which delivers electrical power from a mains feed 14 into the network connection 10. The power control unit 42 may also co-operate with the measuring unit 34 in the distribution point 3 to determine the resistance, available bandwidth, or other properties of the connection 10.

As shown in Figure 3 and 4 the distribution point 3 and customer equipment 4 each have a respective battery power backup 37, 47 associated with their respective power distribution units 36, 46. Under normal conditions these are maintained fully charged by means of trickle currents from the mains power feed 14 to the customer equipment 4, and thus over the "final drop" 10 to the distribution point 3, under the control of the power control units 33, 43. The battery backup 37 allows the distribution point to remain usable when none of the co-operating users 4 having a power feed 14 are on line, or in the event of a power failure affecting all the co-operating users. This ensures that the distribution point 3 remains capable of establishing new connections, and that plain telephony service 5 is not lost in those circumstances. The battery backup may be fed either from the current drawn from the users currently on line, or as a trickle current from all users having a mains feed. The customer termination equipment 4 is also provided with a battery backup 47, to ensure that it remains usable in the event of a failure of the power feed 14.

The use of this battery backup is the subject of our co-pending application entitled "Power Backup System", which was filed on the same date as the present application and has the applicant's reference B31680

In an example based on the simple network of Figure 2, the current to be required from each user is to be made proportional to the available bandwidth (bitrate). The measurement unit 34 may determine this bandwidth directly, indirectly (for example as a function of line resistance, which can be measured by detecting the voltage drop between the measurement points 34, 42) or from data recorded in a database, (for example on the relative geographical locations of the customer premises 4, 104 and the distribution point 3.

In this example, the connections are arranged to carry asymmetric transmissions (different bandwidths in each direction). This is a typical configuration, as most users receive more data than they transmit: an upstream request for a download contains less data than the download itself. In the present example, the shorter connection 10 supports 26Mbit/sec downstream and 12 Mbit/sec upstream (total 38Mbit/sec), whilst the longer connection 110 can only support 12Mbit/sec downstream and 7 Mbit/sec upstream (19Mbit/sec total). The power control unit 33 in the distribution point 3 measures the available bitrate, or some line property such as resistance which is related to this available bitrate, and controls the current drawn from each connection 10, 110 accordingly. In this example, the shorter connection 10, with an available total bitrate of 38Mbit/sec, is required to deliver 60mA, and will thus draw 7.2W from its power supply 14. The line losses over the 100m distance, given by the expression I²R, will be 60mW, and thus 7.14W are delivered at the distribution point. In the present example, the available bit rate on the longer connection 100 is 19Mbit/sec, which is only 50% of that on the shorter connection 10. The power control unit 33 in the distribution point 3 therefore instructs the power control unit 42 in the NTE 104 to launch 50% of the current drawn by the other NTE, i.e. 30mA, thereby launching 3.6W over the connection 100. Power lost in line dissipation is again given by the expression I²R, and is thus 230mW, resulting in 3.37W of usable power being delivered to the distribution point 3 from the longer path 110. (See Table 1, example 3)

**TABLE 1**

| **line length D** | **line resistance R = Dr** | **current I** | **power launched P₀=IV** | **voltage drop at distribution point** | **line losses** δ**P=I²R** | **power delivered P₁=P₀-**δ**P** | **total power from both lines** |
|---|---|---|---|---|---|---|---|
| metres | ohms | milliamps | watts | volts | watts | watts | watts |
| | | | | | | | |
| **Example 1 - equal current** | | | | | | | |
| 100 | 16.8 | **46** | 5.52 | 0.4 | **0.04** | 5.5 | **10.5** |
| 1500 | 252 | **46** | 5.52 | 5.8 | **0.53** | 5.0 | |
| | | | | | | | |
| **Example 2 - equal power** | | | | | | | |
| 100 | 16.8 | **44** | 5.28 | 0.4 | **0.03** | 5.25 | **10.5** |
| 1500 | 252 | **48.7** | 5.84 | 6.1 | **0.60** | 5.25 | |
| | | | | | | | |
| **Example 3 - power proportionate to bitrate** | | | | | | | |
| 100 | 16.8 | **60** | 7.2 | 0.5 | **0.06** | 7.1 | **10.5** |
| 1500 | 252 | **30** | 3.6 | 3.8 | **0.23** | 3.4 | |
| | | | | | | | |
| **Example 4 - equal voltage** | | | | | | | |
| 100 | 16.8 | **60** | 7.2 | 0.5 | **0.06** | 7.1 | **7.6** |
| 1500 | 252 | **4** | 0.5 | 0.5 | **0.004** | 0.5 | |
| | | | | | | | |
| Cable loop resistance r = 0.168 ohm/metre, | | | | | | | |
| Line voltage Vₒ= 120V, Total bitrate = 38Mbit/s (100m), 19Mbit/s (1.5km) | | | | | | | |

Consequently, by apportioning the power drawn from each line according to its line properties, thereby reducing the power requirement from the more remote users, transmission losses are reduced, and those with the best service also contribute most to the power delivered. In this example, the total transmission losses over the two connections 10, 100 are halved compared with the losses caused when both lines pass the same current (290mW instead of 580mW).

In the discussion so far it has been assumed that all the NTEs 4, 104 are arranged to deliver electrical power to their respective connections 10, 110 at the same voltage - 120V in the example. As shown in Table 1, the voltage drop across the drop wires 10, 110 will vary from one connection to the other, being proportional to the product of the resistance in the wire and the current being delivered, resulting in different voltages as measured at the network node 3: in Examples 1 and 2 the voltage of the longer connection 110 at the network node 3 has dropped by about 5%, from 120V to about 114V. (Note that the DP 3 is at the mid-point of the circuit, so the resistance in the wire between the user and the DP is R/2 where R is the resistance in the out-and-back circuit)

Example 4 demonstrates the use of the invention to control the voltage at the DP 3, by controlling the current drawn at each NTE 4, 104 such that the voltage at the distribution point is the same on each supply line. This would require very little power to be drawn from the longer lines (less than 0.5W for a 1500m cable, compared with six times that amount from the same cable in the previous example and fifteen times that amount (in both examples) from a 100 metre cable). However, in populous areas, where the density of population is fairly evenly distributed, there will be more long-length lines than short-length ones, so the aggregate power available from the more distant users may be significant: the number of premises at a given distance "r" from a node being proportional to "r". (This can be seen by considering narrow annular regions of different internal radii rᵢ, and each of width d, where d<<r: their respective areas Aᵢ are given by: **Aᵢ = pi((rᵢ+d)²-rᵢ),** which reduces to **Aᵢ = pi(2rᵢd+d²).** However, since d is both fixed and small compared to rᵢ so, neglecting the very small value of **d²,** Aᵢ is proportional to rᵢ.) Assuming an even distribution of users over the area of coverage, the number of users at any given distance is therefore proportional to that distance.

Thus, in Example 4 above the total power collected from each user 1500m away is a small fraction of that collected from each user at one-fifteenth that distance, but there are so many more of the latter that the total collected from the more distant users would be significant.

Where population is less evenly distributed, nodes tend to be placed close to local concentrations of population (for example in a small village), in order to minimise the total length of cabling required. In such situations most local connections are relatively short, with relatively few long ones - indeed, in sparsely populated areas the longest connections (to remote farmsteads etc) may be very long indeed.

It should be noted that customer equipment without provision for local power feeds may also be connected to the distribution point 3. The power control unit operates dynamically, to take account of different users coming on or off line, so that power is maintained when some users go off line. The amount of power, if any, delivered by each customer equipment may be recorded by the distribution point 3, and used to calculate an appropriate discount to each user's bill.

## Claims

1. A telecommunications network node having electrical telecommunications connection means for connection to a plurality of network terminations, power management means to receive power from at least some of the plurality of network terminations, measurement means for determining a property of each electrical telecommunications connection, and power control means to control the power delivered by the respective network terminations to their respective connections as a function of the property so determined.

2. A telecommunications network node according to claim 1, in which the power to be delivered by each termination is in an inverse relation to the power losses inherent in the connection.

3. A telecommunications network node according to claim 2, comprising means for determining the available capacity of each connection, and controlling the power to be delivered by each termination to be in direct proportion to the available capacity of the connection.

4. A telecommunications network node according to claim 2, comprising means for determining the electrical-resistance of each connection, and controlling the power to be delivered by each termination to be in an inverse relation to the electrical resistance of the connection.

5. A telecommunications network node according to claim 2, comprising means for controlling the line voltage on each connection at the node to be a predetermined value.

6. A telecommunications node according to any preceding claim, wherein the power control means controls the power of a plurality of connections such that the total power delivered is a predetermined aggregate value.

7. A telecommunications node according to claim 6, wherein the power control means limits the power to be delivered from any individual connection to a predetermined maximum value.

8. A telecommunications node according to any preceding claim, wherein the measurement means measures properties of the electrical connections directly, and the power control unit acts directly on the electrical input.

9. A telecommunications node according to any of claims 1 to 7, wherein the node has means for communicating with a remote network termination to determine the appropriate line properties, and/or to control the power to be delivered by the network termination.

10. A termination unit for a telecommunications network, comprising a power feed for delivering electrical power to the unit and a communications connection for electrical connection to the network, and means for responding to an input delivered over the network connection to control the power delivered into the network connection.

11. A termination unit according to claim 10, comprising measurement means for measuring a property of the communications connection and transmission means for transmitting the measured value over the communications connection.

12. A method of delivering electrical power to a telecommunications network node from a plurality of network terminations, wherein the power delivered by the respective network termination is controlled to be a function of a property of the connection to that termination.

13. A method according to claim 12, in which the power delivered by each termination is in an inverse relation to the power losses inherent in the connection.

14. A method according to claim 13, wherein the power delivered by each termination is in proportion to the available capacity of the connection.

15. A method according to claim 13, wherein the power delivered by each termination to be in an inverse relation to the electrical resistance of the connection.

16. A method according to claim 13, wherein the line voltage on each connection at the node is controlled to be a predetermined value.

17. A method according to any of claims 12 to 16, wherein the total power delivered to the node from the plurality of terminations is a predetermined aggregate value.

18. A method according to claim 17, wherein the power delivered from any individual connection is limited to a predetermined maximum value.
